# EUROPÄISCHE PATENTANMELDUNG

(11) **EP 2 030 953 A1**
(43) Veröffentlichungstag der Anmeldung: **04.03.2009**
(21) Anmeldenummer: 07024251.6
(22) Anmeldetag: 13.12.2007
(51) Int. Cl.: C03B 5/235, F23C 9/00

(54) **Verfahren und Vorrichtung zum Schmelzen von Glas**

(30) Priorität: 30.08.2007 DE 102007041086
(71) Anmelder: Linde Aktiengesellschaft, 80807 München (DE)
(72) Erfinder: Mahrenholtz, Hans, 86567 Hilgertshausen (DE); Mieth, Rainer, 85591 Vaterstetten (DE)
(74) Vertreter: Gellner, Bernd

(57) **Zusammenfassung**

Die Erfindung betrifft ein Verfahren zum Schmelzen von Glas, das folgende Schritte aufweist: a) Zugeben eines Glasgemenges, das Glasscherben und/oder staubförmige Rohstoffe enthält, über mindestens eine Öffnung (1) in einen Einlegebereich (2) einer Glasschmelzwanne (A), b) Erwärmen des Glasgemenges im Einlegebereich (2) bis das Glasgemenge zu schmelzen beginnt, wobei die Erwärmung mit Hilfe mindestens eines Brenners (6) erfolgt, dem ein Brennstoff und ein geeignetes Oxidant zugeführt werden, c) Transportieren des angeschmolzenen Glasgemenges in einen Läuterbereich (3) der Glasschmelzwanne (A), d) Fortführen des Schmelzprozesses im Läuterbereich (3) mit Hilfe mindestens eines weiteren Brenners (7), der so betrieben wird, dass eine flammenlose Verbrennung stattfindet. Des Weiteren betrifft die Erfindung einen Brenner und einen Glasschmelzofen.

## Beschreibung

Die vorliegende Erfindung betrifft ein Verfahren zum Schmelzen von Glas, das folgende Schritte aufweist: a) Zugeben eines Glasgemenges, das Glasscherben und/oder staubförmige Rohstoffe enthält, über mindestens eine Öffnung in einen Einlegebereich einer Glasschmelzwanne, b) Erwärmen des Glasgemenges im Einlegebereich bis das Glasgemenge zu schmelzen beginnt, wobei die Erwärmung mit Hilfe mindestens eines Brenners erfolgt, dem ein Brennstoff und ein geeignetes Oxidant zugeführt werden, c) Transportieren des angeschmolzenen Glasgemenges in einen Läuterbereich der Glasschmelzwanne, d) Fortführen des Schmelzprozesses im Läuterbereich mit Hilfe mindestens eines weiteren Brenners.

Desweiteren betrifft die vorliegende Erfindung einen Brenner zum Einsatz in einem Glasschmelzofen aufweisend einen Brennerstein mit einer Bohrung (f) und weiteren Bohrungen (e, c), wobei die Bohrung (f) ein Doppelrohr aufnimmt, welches eine Brennstoffzuführung und eine Oxidantzuführung aufweist und wobei die Bohrungen (c) auch zur Zuführung von Oxidant vorgesehen sind.

Darüberhinaus ist ein Glasschmelzofen Gegenstand der vorliegenden Erfindung, mit einer Glasschmelzwanne, mindestens einer Öffnung zur Zugabe eines Glasgemenges, das Glasscherben und/oder staubförmige Rohstoffe enthält, in einen Einlegebereich, in dem mindestens ein Brenner zur Erwärmung des Glasgemenges vorgesehen ist, sowie Mittel zum Transport des erwärmten Glasgemenges in einen Läuterbereich, in der mindestens ein Brenner gemäß dem Oberbegriff von Anspruch 6 zum Fortführen des Schmelzprozesses vorgesehen ist, sowie ein Abstehbereich zum Beruhigen und Abkühlen des geschmolzenen Glasgemenges und eine Arbeitswanne vorgesehen sind, jeweils mit Mitteln zum Transportieren des geschmolzenen Glasgemenges von einem Bereich in den nächsten.

Zum Schmelzen von Glas sind eine Reihe von Vorgehensweisen und Vorrichtungen bekannt. Besonders verbreitet ist die Verwendung von fossil beheizten Glasschmelzwannen in einem Glasschmelzofen. Eine herkömmliche Glasschmelzwanne wird grob in drei unterschiedliche Bereiche eingeteilt, in einen Einlegebereich, einen Läuterbereich und einen Abstehbereich. Die Glasschmelzwanne bildet das Kernstück eines Glasschmelzofens.

Das Glasgemenge, bestehend aus Recycling- oder Rücklaufscherben, natürlichen und synthetischen Rohstoffen wie z.B. Sand, Soda, Dolomit, Feldspat oder Phonolith und diversen Zuschlagstoffe, z.B. Arsenik (zur Läuterung) und Kohle (zur Färbung), wird in den Glasschmelzofen eingelegt.

Das Glas beginnt im Einlegebereich zu Schmelzen. Im Läuterbereich schmilzt das Glas fertig und wird in der Regel durch Umwälzen homogenisiert. Im Abstehbereich wird das fertig geschmolzene Glas nach der Homogenisierung für die Weiterverarbeitung beruhigt und abgekühlt.

Beim Glasschmelzen werden bekanntermaßen Brenner mit leuchtender Flamme eingesetzt. Als Oxidationsmittel findet Verbrennungsluft (vorgeheizt oder mit Umgebungstemperatur) oder mit Sauerstoff angereicherte Verbrennungsluft bis hin zu reinem Sauerstoff Verwendung. Als fossile Brennstoffe kommen häufig Gas, Erdgas , Propan und Öl zum Einsatz.

Um die leuchtende Flamme zu erzeugen, werden Brennstoff und Oxidant über einen Brenner in den Glasschmelzofen geführt, dort vermischt und verbrannt. Die Eintrittsgeschwindigkeiten von Oxidant und Brennstoff in den Glasschmelzofen liegen dabei deutlich unterhalb von 80 m/s, wobei der Brennstoff in die gleiche Richtung strömt wie der Oxidant. Derartige Brenner erzeugen eine deutlich wahrnehmbare, räumlich umgrenzte, leuchtende Flamme. Die Wärmestrahlung solcher Flammen ist inhomogen in ihrer Verteilung, da leuchtende Flammen einen definierten Bereich der chemischen Reaktion bedingen, und verursacht örtlich begrenzte Temperaturspitzen im sog. Ofengewölbe und an den Ofenwänden sowie im Glasbad, die die maximale Temperatur sowie das Ausmaß der thermischen Belastung im Glasschmelzofens bestimmen. Das Ausmaß der thermischen Belastung ist u.a. für die Höhe des Verschleißes z.B. des Feuerfestmaterials der Ofenwände, wie auch für die Stickoxidbildungsrate im Abgas des Glasschmelzofens maßgebend.

Der vorliegenden Erfindung liegt daher die Aufgabe zugrunde, ein hinsichtlich der auftretenden thermischen Belastung verbessertes Verfahren und einen dazu geeigneten Brenner sowie einen in dieser Hinsicht verbesserten Glasschmelzofen zur Verfügung zu stellen.

Die gestellte Aufgabe wird durch ein Verfahren gelöst, das folgende Schritte aufweist: a) Zugeben eines Glasgemenges, das Glasscherben und/oder staubförmige Rohstoffe enthält, über mindestens eine Öffnung in einen Einlegebereich einer Glasschmelzwanne, b) Erwärmen des Glasgemenges im Einlegebereich bis das Glasgemenge zu schmelzen beginnt, wobei die Erwärmung mit Hilfe mindestens eines Brenners erfolgt, dem ein Brennstoff und ein geeignetes Oxidant zugeführt werden, c) Transportieren des angeschmolzenen Glasgemenges in einen Läuterbereich der Glasschmelzwanne, d) Fortführen des Schmelzprozesses im Läuterbereich mit Hilfe mindestens eines weiteren Brenners, der so betrieben wird, dass eine flammenlose Verbrennung stattfindet.

Die flammenlose Verbrennung erzeugt eine deutlich gleichmäßigere Wärmeverteilung im Glasschmelzofen. Somit kann dem Glasschmelzofen auf diese Weise mehr Energie zugeführt werden, da die Temperatur der Hotspots, also der Orte mit Temperaturmaximas, niedriger liegt als bei einer ansonsten vergleichbaren Verbrennung mit leuchtender Flamme. Die entstehende thermische Belastung z.B. der Ofenwände liegt aufgrund der reduzierten Temperatur der Hotspots deutlich unter den für ansonsten vergleichbare leuchtende Flammen ermittelten Werte.

Ein Verfahren ist hierbei auch als hinsichtlich der thermischen Belastung verbessert anzusehen, wenn die thermische Belastung zwar nicht reduziert wird, aber dieser Belastung z.B. eine höhere Durchschnittstemperatur im Glasschmelzofen oder ein höherer Gesamtenergieeintrag in den Glasschmelzofen gegenüber steht.

Das Transportieren des Glasgemenges kann auch lediglich durch ein Fließenlassen, z.B. auf einem gegen die Waagrechte geneigten, aber auch auf einem ebenen Boden der Glasschmelzwanne, erfolgen.

Bei der flammenlosen Verbrennung erfolgt die exotherme Oxidation des Brennstoffs aufgrund der Verdünnung nicht mehr örtlich begrenzt, sondern im gesamten Ofenraum, der durch die flammenlosen Brenner abgedeckt wird, z.B. bei einer Durchschnittstemperatur im Ofenraum von etwas über 800°C.

Um die Verbrennung flammenlos ablaufen zu lassen, ist es erforderlich den Brennstoff und/oder den Oxidant geeignet zu modifizieren.

Bevorzugt werden der Brennstoff und/oder der Oxidant für den oder die Brenner, die so betrieben werden, dass eine flammenlose Verbrennung stattfindet, soweit mit Gasen der Ofenatmosphäre verdünnt, dass sich das Verhältnis von Brennstoff zu Oxidant in einen Bereich außerhalb des Zündbereichs verschiebt. Der Zündbereich ist als der Bereich definiert, der zwischen der oberen und der unteren Zündgrenze liegt. Dabei sind Zündgrenzen die Grenzen in der Zusammensetzung innerhalb derer ein Gasgemisch gerade noch zündbar ist. Sie werden meist in Volumenprozent des brennbaren Gases angegeben. An der oberen Zündgrenze herrscht Brenngasüberschuß, an der unteren Überschuß an Oxidant. Die Zündgrenzen sind in der Regel druck- und temperaturabhängig.

Werte für Zündgrenzen können als Beispiele der Tabelle 1 entnommen werden.

**Tabelle 1: Zündgrenzen in Luft und in Sauerstoff (Min. = untere Zündgrenze, Max. = obere Zündgrenze)**

| ***Brennstoff*** | ***Min. in Luft*** | ***Max. in Luft*** | ***Min. in O2*** | ***Max. in O2*** |
|---|---|---|---|---|
| H2 | 4,0 % | 74,2 % | 4,7 % | 93,9 % |
| CH4 | 5,0 % | 15,0 % | 5,4 % | 59,2 % |
| C3H8 | 2,1 % | 9,4 % | 2,3 % | 55,0 % |
| C4H10 | 1,9 % | 8,4 % | 1,8 % | 49,0 % |
| CO | 12,5 % | 74,2 % | 15,5 % | 93,9 % |

Eine flammenlose Verbrennung findet nur statt, wenn für das Verhältnis von Brennstoff zu Oxidant ein Wert eingestellt wird, der außerhalb des Zündbereichs liegt.

Um entsprechende Werte, also eine passende Verdünnung zu erreichen, müssen in der Regel große Mengen von Gasen der Ofenatmosphäre dem Brennstoff und/oder dem Oxidant beigemischt werden. Z.B. bei einer hohen Austrittsgeschwindigkeit der aus dem Brennerkopf austretenden Gase können Gase der Ofenatmosphäre mitgerissen werden, die dann in den Gasstrahl (Sauerstoff/Oxidant und/oder Brennstoff) diffundieren und diesen verdünnen.

Zur Erzeugung einer nicht leuchtenden Flamme ist also eine Verdünnung des Oxidanten oder des Brennstoffs oder auch beider mit Gasen der Ofenatmosphäre des Glasschmelzofens notwendig. Dies geschieht z.B. durch Diffusion.

Als Beispiel für ein geeignetes Mischungsverhältnis zwischen Gasen der Ofenatmosphäre und dem Oxidant kann ein Verhältnis von ca. 5:1 angegeben werden. Für den Brennstoff CH₄ könnte dazu eine Beispielrechnung lauten: Ein Gasgemisch aus 5% CH₄ und 95% Luft wäre ein zündfähiges Gemisch, das eine leuchtende Flamme bedingen würde. Mischt man der Luft Gas der Ofenatmosphäre im Verhältnis 5:1 bei, entsteht einfach nachzurechnen ein Gemisch, das in 5% CH₄, in etwa 15,8% Luft und ca. 79,2% Ofengase enthält. Setzt man nun lediglich den Brennstoff und die Luft zueinander in Beziehung, so dass diese in Summe wieder 100% ergeben, so ergibt sich ein Verhältnis von ca. 1:3 für Brennstoff zu Luft. Dies entspricht einem Wert von in etwa 24% CH₄. Dieser Wert liegt außerhalb des Zündbereichs, der laut Tabelle 1 für CH₄ mit 5 bis 15% CH₄ in Luft angegeben ist.

Allgemein führt die erfindungsgemäße Verdünnung von Brennstoff und/oder Oxidant dazu, dass durch die damit einhergehende Verschiebung des Verhältnisses von Brennstoff zu Oxidant ein Verhältnis der beiden zueinander erreicht wird, das außerhalb des Zündbereichs liegt.

Um die durch die Beimischung erhöhte Gesamtmenge an Gas im Glasschmelzofen ansaugen und umwälzen zu können, sind hohe Strömungsgeschwindigkeiten z.B. des Oxidanten erforderlich. Solch hohe Strömungsgeschwindigkeiten können im Läuterbereich problemlos realisiert werden.

Gemäß einer zweckmäßigen Ausgestaltung der vorliegenden Erfindung wird das Glasgemenge im Läuterbereich mit Hilfe der flammenlosen Verbrennung vollständig geschmolzen. In der Regel liegt danach ein vollständig verflüssigtes Glasgemenge vor.

Gemäß einer besonders vorteilhaften Ausgestaltung wird das geschmolzene Glasgemenge homogenisiert. Dies geschieht beispielsweise durch Umwälzen des geschmolzenen Glasgemenges im Läuterbereich. Das Umwälzen der Glasschmelze kann z.B. durch aufsteigende Gasblasen (Bubbling) erreicht werden, wobei der Auftrieb der Gasblasen die Umwälzung bewirkt. Eine andere Möglichkeit stellt die Verwendung einer elektrischen Zusatzheizung dar (Boosting), wobei an den Elektroden erhitztes Gas aufsteigt und das Umwälzen der Schmelze verursacht.

Gemäß einer vorteilhaften Weiterbildung der Erfindung wird das geschmolzene Glasgemenge in einen Abstehbereich geleitet. Im Abstehbereich wird eine Beruhigung und Abkühlung der Glasschmelze, z.B. vor der Weiterverarbeitung in einer Arbeitswanne, vorgenommen. Es können noch weitere Brenner auch im Abstehbereich zum Einsatz kommen, z.B. um einen sanften Temperaturabfall zu gewährleisten.

Die Aufgabe der vorliegenden Erfindung wird auch durch einen Brenner zum Einsatz in einem Glasschmelzofen gelöst, der dadurch gekennzeichnet ist, dass die Anordnung der Bohrungen (f, e, c) zueinander, die Anzahlen der Bohrungen (f, e, c) und/oder die Durchmesser der Bohrungen (f, e, c) so vorgesehen sind, dass sich nach dem Zusammentreffen der Brennstoff- und Oxidantströme eine flammenlose Verbrennung als Oxidationsvorgang einstellt.

Wie bereits ausführlich erläutert findet eine flammenlose Verbrennung nur statt, wenn für das Verhältnis von Brennstoff zu Oxidant ein Wert eingestellt wird, der außerhalb des Zündbereichs liegt.

Um entsprechende Werte, also eine passende Verdünnung zu erreichen, müssen in der Regel große Mengen von Gasen der Ofenatmosphäre dem Brennstoff und/oder dem Oxidant beigemischt werden. Z.B. bei einer hohen Austrittsgeschwindigkeit der aus dem Brennerkopf austretenden Gase können Gase der Ofenatmosphäre mitgerissen werden, die dann in den Gasstrahl (Sauerstoff/Oxidant und/oder Brennstoff) diffundieren und diesen verdünnen.

Die Strömungsmengen und -geschwindigkeiten der Gasströme durch die einzelnen Bohrungen (f, e, c) eines erfindungsgemäßen Brenners werden also in der Regel so gewählt, dass eine Beimischung von Gasen der Ofenatmosphäre stattfindet. Z.B. werden 50 bis 99% des Oxidanten über die Bohrungen (c) mit Geschwindigkeiten von 60 bis 150 m/s zugeführt. Der Brennstoff wird z.B. mit 40 bis 100 m/s zugeführt. Der Rest des Oxidanten wird über die Bohrung (b) geführt.

Die Beimischung zum Brennstoff und/oder zum Oxidant ist also in der Regel als Beimischung in einen oder beide der aus dem Brennerkopf austretenden Gasströme (Brennstoff- und Oxidantstrahl) vorgesehen. In Ausnahmefällen kann die Beimischung auch in die Brennstoffzuführung und/oder in die Oxidantversorgung, also vor Austritt der Gasströme aus dem Brennerkopf, erfolgen.

Als Einrichtungen zur Beimischung können beispielsweise Einrichtungen vorgesehen sein, die sich die Diffusion der Gase zu Nutze machen. Die Ofengase werden dabei durch eine hohe Austrittsgeschwindigkeit der aus dem Brennerkopf austretenden Gase mitgerissen, diffundieren in den Gasstrahl (Sauerstoff/Oxidant und/oder Brennstoff) und führen zur Verdünnung des Gases. Alternativ können Mischkammern und/oder Injektoren zur Beimischung von Gasen der Ofenatmosphäre des Glasschmelzofens in die Brennstoffzuführung und/oder in die Oxidantversorgung vorgesehen sein.

Bevorzugt sind zusätzliche Mittel zum mengenmäßigen Steuern oder Regeln der Beimischung vorgesehen.

Die Aufgabe der vorliegenden Erfindung wird des Weiteren durch einen Glasschmelzofen gelöst, der dadurch gekennzeichnet ist, dass in der Läuterzone mindestens ein Brenner gemäß Anspruch 6 vorgesehen ist.

Die Beimischung der Gase der Ofenatmosphäre ist dabei wie bereits ausführlich beschrieben vorgesehen.

Mit besonderem Vorteil sind zusätzliche Mittel zum mengenmäßigen Steuern oder Regeln der Beimischung vorgesehen.

Bevorzugt sind der oder die für eine flammenlose Verbrennung ausgelegten Brenner im Bereich der Seitenwände des Glasschmelzofens und/oder im Bereich des Ofengewölbes angebracht.

Die vorliegende Erfindung bietet eine Reihe von Vorteilen, wie z.B. eine gleichmäßigere Wärmeverteilung im Glasschmelzofen und eine Verminderung der Stickoxidemissionen des Glasschmelzofens.

Die Erfindung sowie weitere Ausgestaltungen der Erfindung werden im Folgenden anhand der in den Figuren dargestellten Ausführungsbeispiele näher erläutert. Die Figuren zeigen:
- Figur 1: einen erfindungsgemäßen Glasschmelzofen in Draufsicht,
- Figur 2: einen erfindungsgemäßen Glasschmelzofen im Querschnitt und
- Figur 3: einen erfindungsgemäßen Brenner für die flammenlose Verbrennung.

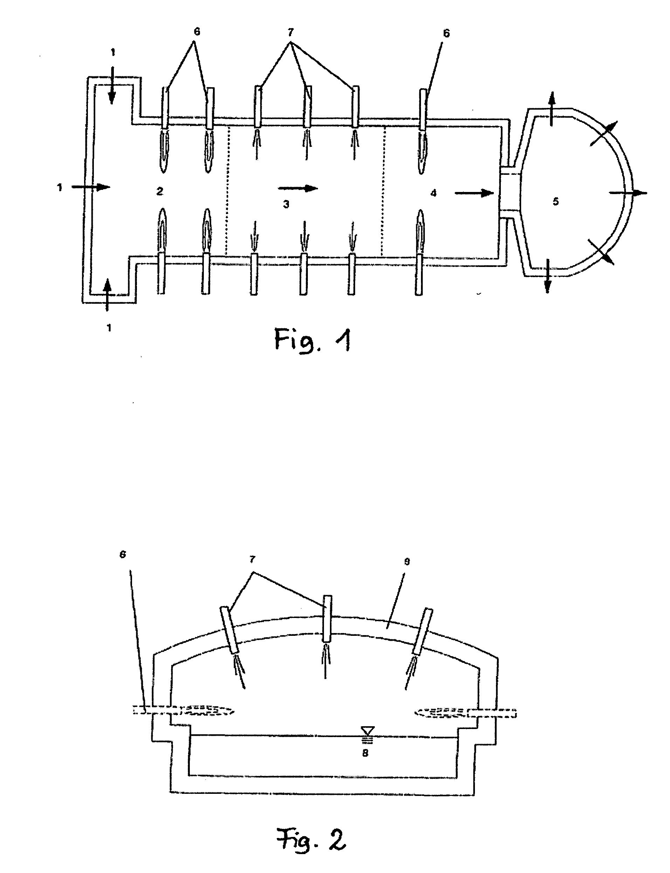

Im Einzelnen zeigt die Figur 1 einen Glasschmelzofen mit einer Glasschmelzwanne A, drei Öffnungen 1 zur Zugabe eines Glasgemenges, das Glasscherben und/oder staubförmige Rohstoffe enthält. Das Glasgemenge wird in einen Einlegebereich 2 zugegeben, in dem in diesem Beispiel vier Brenner 6 zur Erwärmung des Glasgemenges vorgesehen sind. Im an den Einlegebereich 2 angrenzenden Läuterbereich 3 sind in diesem Beispiel sechs Brenner 7 zum Fortführen des Schmelzprozesses vorgesehen, die mit einer Brennstoffzuführung und einer Versorgung mit Oxidant sowie einem Brennerkopf ausgestattet sind (in Figur 1 nicht dargestellt), wobei nach dem Austritt des Brennstoffs aus dem Brennerkopf ein Oxidationsvorgang stattfindet, wobei die Brenner 7 in der Läuterzone 3 jeweils eine Einrichtung zur Beimischung von Gasen der Ofenatmosphäre des Glasschmelzofens zum Oxidant aufweisen (in Figur 1 nicht dargestellt), so dass eine flammenlose Verbrennung stattfindet.

Das geschmolzene Glasgemenge wird aus dem Läuterbereich zum Beruhigen und Abkühlen in einen Abstehbereich 4 verbracht.

Im Beispiel der Figur 1 sind die für eine flammenlose Verbrennung ausgelegten Brenner 7 im Bereich der Seitenwände des Glasschmelzofens angebracht. Im Abstehbereich 4 sind zwei weitere Brenner 6 vorgesehen, die für die Erzeugung einer leuchtenden Flamme ausgelegt sind und so betrieben werden.

Zum Abschluß des Glasschmelzverfahrens wird die im Abstehbreich 4 beruhigte und abgekühlte Glasschmelze der Arbeitswanne 5 zugeführt, in der eine Weiterverarbeitung der Glasschmelze stattfinden kann.

Die Figur 2 zeigt einen Querschnitt durch einen erfindungsgemäßen Glasschmelzofen, der die für eine flammenlose Verbrennung ausgelegten Brenner 7 im Bereich des Ofengewölbes 9 zeigt. Die Brenner 6 für eine leuchtende Flamme im Einlegebereich sind hier gestrichelt dargestellt. Im unteren Bereich des Glasschmelzofens, der sog. Glasschmelzwanne A, ist mit der Bezugsziffer 8 die Glasschmelze, die auch Glasbad genannt wird, eingezeichnet.

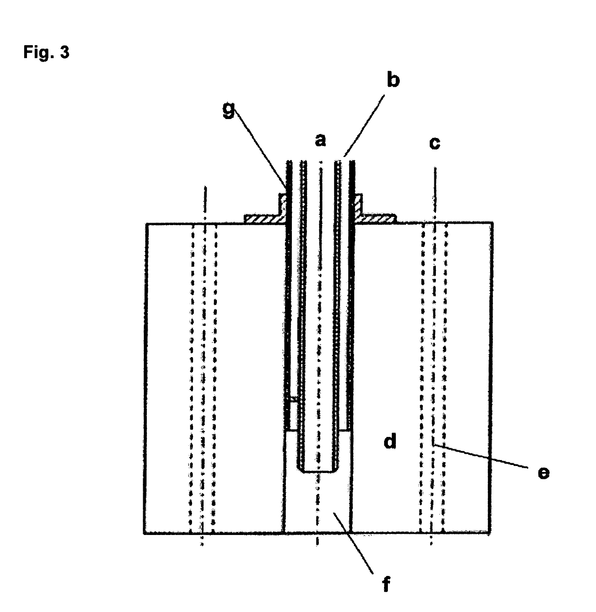

Die Figur 3 zeigt einen erfindungsgemäßen Brenner 7 zum Einsatz in einem Glasschmelzofen aufweisend einen Brennerstein d mit einer Bohrung f und weiteren Bohrungen e, c, wobei die Bohrung f ein Doppelrohr g aufnimmt, welches eine Brennstoffzuführung a und eine Oxidantzuführung b aufweist und wobei die Bohrungen c auch zur Zuführung von Oxidant vorgesehen sind, dadurch gekennzeichnet, dass die Anordnung der Bohrungen f, e, c zueinander, die Anzahlen der Bohrungen f, e, c und/oder die Durchmesser der Bohrungen f, e, c so vorgesehen sind, dass sich nach dem Zusammentreffen der Brennstoff- und Oxidantströme eine flammenlose Verbrennung als Oxidationsvorgang einstellt.

## Patentansprüche

1. Verfahren zum Schmelzen von Glas, das folgende Schritte aufweist: a) Zugeben eines Glasgemenges, das Glasscherben und/oder staubförmige Rohstoffe enthält, über mindestens eine Öffnung (1) in einen Einlegebereich (2) einer Glasschmelzwanne (A), b) Erwärmen des Glasgemenges im Einlegebereich (2) bis das Glasgemenge zu schmelzen beginnt, wobei die Erwärmung mit Hilfe mindestens eines Brenners (6) erfolgt, dem ein Brennstoff und ein geeignetes Oxidant zugeführt werden, c) Transportieren des angeschmolzenen Glasgemenges in einen Läuterbereich (3) der Glasschmelzwanne (A), d) Fortführen des Schmelzprozesses im Läuterbereich (3) mit Hilfe mindestens eines weiteren Brenners (7), der so betrieben wird, dass eine flammenlose Verbrennung stattfindet.

2. Verfahren nach Anspruch 1, **dadurch gekennzeichnet, dass** der Brennstoff und/oder der Oxidant für den oder die Brenner (7), die so betrieben werden, dass eine flammenlose Verbrennung stattfindet, soweit mit Gasen der Ofenatmosphäre verdünnt werden, dass sich das Verhältnis von Brennstoff zu Oxidant in einen Bereich außerhalb des Zündbereichs verschiebt

3. Verfahren nach Anspruch 1 oder 2, **dadurch gekennzeichnet, dass** das Glasgemenge im Läuterbereich (3) mit Hilfe der flammenlosen Verbrennung vollständig geschmolzen wird.

4. Verfahren nach einem der Ansprüche 1 bis 3, **dadurch gekennzeichnet, dass** das geschmolzene Glasgemenge homogenisiert wird.

5. Verfahren nach einem der Ansprüche 1 bis 4, **dadurch gekennzeichnet, dass** das geschmolzene Glasgemenge in einen Abstehbereich (4) geleitet wird.

6. Brenner (7) zum Einsatz in einem Glasschmelzofen aufweisend einen Brennerstein (d) mit einer Bohrung (f) und weiteren Bohrungen (e, c), wobei die Bohrung (f) ein Doppelrohr (g) aufnimmt, welches eine Brennstoffzuführung (a) und eine Oxidantzuführung (b) aufweist und wobei die Bohrungen (c) auch zur Zuführung von Oxidant vorgesehen sind, **dadurch gekennzeichnet, dass** die Anordnung der Bohrungen (f, e, c) zueinander, die Anzahlen der Bohrungen (f, e, c) und/oder die Durchmesser der Bohrungen (f, e, c) so vorgesehen sind, dass sich nach dem Zusammentreffen der Brennstoff- und Oxidantströme eine flammenlose Verbrennung als Oxidationsvorgang einstellt.

7. Glasschmelzofen mit einer Glasschmelzwanne (A), mindestens einer Öffnung (1) zur Zugabe eines Glasgemenges, das Glasscherben und/oder staubförmige Rohstoffe enthält, in einen Einlegebereich (2), in dem mindestens ein Brenner (6) zur Erwärmung des Glasgemenges vorgesehen ist, sowie Mittel zum Transport des erwärmten Glasgemenges in einen Läuterbereich (3), in der mindestens ein Brenner (7) gemäß dem Oberbegriff von Anspruch 6 zum Fortführen des Schmelzprozesses vorgesehen ist, sowie ein Abstehbereich (4) zum Beruhigen und Abkühlen des geschmolzenen Glasgemenges und eine Arbeitswanne (5) vorgesehen sind, jeweils mit Mitteln zum Transportieren des geschmolzenen Glasgemenges von einem Bereich in den nächsten, **dadurch gekennzeichnet, dass** in der Läuterzone (3) mindestens ein Brenner (7) gemäß Anspruch 6 vorgesehen ist.

8. Glasschmelzofen nach Anspruch 7, **dadurch gekennzeichnet, dass** der oder die für eine flammenlose Verbrennung ausgelegten Brenner (7) im Bereich der Seitenwände des Glasschmelzofens und/oder im Bereich des Ofengewölbes (9) angebracht sind.
